# EUROPÄISCHE PATENTSCHRIFT

(11) **EP 0 610 170 B1**
(45) Veröffentlichungstag und Bekanntmachung des Hinweises auf die Patenterteilung: **25.06.1997**
(21) Anmeldenummer: 94890025.3
(22) Anmeldetag: 01.02.1994
(51) Int. Cl.: H01S 3/036, H01S 3/0975

(54) **Gaslaser**
Gas laser
Laser à gaz

(30) Priorität: 01.02.1993 AT 156/93
(43) Veröffentlichungstag der Anmeldung: 10.08.1994
(73) Patentinhaber: Schuöcker, Dieter, Dr. Univ. Prof., A-1130 Wien (AT)
(72) Erfinder: Schuöcker, Dieter, Dr. Univ. Prof., A-1130 Wien (AT)
(74) Vertreter: Casati, Wilhelm, Dipl.-Ing.

(56) Entgegenhaltungen:
- EP-A- 0 073 992
- EP-A- 0 457 061
- DE-A- 3 810 604
- DE-C- 2 909 722
- US-A- 4 813 052

## Beschreibung

Die Erfindung betrifft einen Gaslaser mit einem lichtverstärkenden Medium, das einen, zwischen zueinander koaxialen Elektrodenanordnungen befindlichen Raum, der zwischen Resonatorspiegeln angeordnet ist, durchströmt, wobei über den Umfang des Raumes zwischen den Elektrodenanordnungen verteilt, Trennwände angeordnet sind, die in radialer Richtung zur Achse der Elektrodenanordnungen verlaufen und das lichtverstärkende Medium sowie den hohlzylindrischen Laserstrahl über den Umfang der Anordnung in mehrere Segmente unterteilen und die Trennwände sich nur zwischen den beiden Enden der Elektrodenanordnungen (in Richtung der Achse der Anordnung betrachtet) erstrecken und vor den Resonatorspiegeln enden, sodaß zwischen den Trennwänden und den Resonatorspiegeln ein Freiraum vorhanden ist, der von den Trennwänden nicht unterteilt wird, somit die sich in den einzelnen Kammern zwischen benachbarten Trennwänden ausbildenden Laserstrahlen zumindest in den, den beiden Spiegeln benachbarten Bereichen, die Möglichkeit einer Synchronisierung und Kopplung haben, sodaß ein über den Umfang der Anordnung kohärentes Wellenfeld zustandekommen kann, wobei eine Kühlung für das lichtverstärkende Medium vorgesehen ist.

Aus der DE-A1 38 10 604 ist es bekannt, Gaslaser für hohe Strahlleistungen vorteilhafterweise so zu bauen, daß das lichtverstärkende Plasma durch hochfrequenzgespeiste, koaxiale Elektroden erzeugt und aufrechterhalten wird. Die als Wärme auftretende Verlustleistung wird durch eine rasche Gasströmung, welche die zueinander koaxial angeordneten Elektroden achsenparallel durchsetzt, abgeführt. Für den optischen Resonator zur Rückkopplung des durch das Plasma gebildeten Lichtverstärkers, zur Bündelung der erzeugten Laserstrahlung und zur Auskopplung derselben können bevorzugt zwei kreisringförmige Spiegel Verwendung finden, durch deren zentrale kreisförmige Öffnung die rasche Gasströmung hindurchgeführt werden kann. Einer der beiden Spiegel kann jedoch auch kreisförmig ohne zentrales Loch ausgebildet sein. Derartige Resonatoren, die schon in dem oben genannten Dokument angeführt wurden, erlauben es, entweder einen langen, dünnen Laserstrahl zu erzeugen, der dann zwischen den beiden Spiegeln zick-zack-förmig auf der Oberfläche eines Rotationshyperboloids hin- und herläuft und an einem der beiden Spiegel an einer Stelle des Umfanges ausgekoppelt wird, soferne die beiden Spiegel gegeneinander leicht verkippt sind, womit ein "stabiler" Resonator zustandekommt, oder es werden gemäß einem nicht zum Stand der Technik gehörenden Vorschlag, exakt parallel zueinander justierte Kreisspiegel verwendet und ein hohlzylindrischer Laserstrahl erzeugt, der dann über den ganzen Umfang eines der beiden Spiegel gleichmäßig ausgekoppelt wird, wobei es sich dann um einen "instabilen" Resonator handelt.

Die rechnerische Abschätzung eines CO₂-Lasers mit derartigen koaxialen Elektroden zeigt, daß bei Zufuhr hochfrequenter Energie pro Volumseinheit des Plasmas von 20 W/cm³ und einer Gasströmung mit einer Geschwindigkeit von 150 m/sec bei einem Außendurchmesser des koaxialen Plasmas von 30 cm und einer Länge von 40 cm, grundsätzlich eine Strahlleistung von etwa 10 kW erzeugt werden kann, womit derartige Laser ein außerordentlich günstiges Volums-/Leistungsverhältnis zeigen und damit auch die Erzeugung sehr hoher Strahlleistungen grundsätzlich ermöglichen.

Geht man nun von dem eingangs erwähnten Beispiel eines Gaslasers mit einer Strahlleistung von 10 kW aus, so muß dafür ein Volumen von nur etwa 50 Litern eine elektrische Leistung von etwa 40 kW zugeführt werden, wenn von einem Wirkungsgrad des CO₂-Lasers von etwa 20% ausgegangen wird. Diese hohe Energiezufuhr bewirkt, trotz Einsatzes einer die Verlustleistung abführenden raschen Gasströmung, wegen der grundsätzlich vorhandenen Neigung des Plasmas zu Instabilitäten, das Entstehen räumlicher Inhomogenitäten und zeitliche Schwankungen aller Plasmaeigenschaften, wie Gasdruck, Temperatur und Elektronendichte, sowie der Ionendichte. Besonders gefährlich ist es, wenn dabei die gleichmäßige Verteilung des Plasmas über den Umfang der Anordnung gestört wird, weil nur eine solche gleichmäßige Verteilung eine einwandfreie Funktion des Lasers gewährleistet, insbesondere eine optimale Strahlleistung erreichen läßt.

Weiters weist eine solche Anordnung die Neigung auf, daß sich nach dem Anschwingen eines Strahles an einer Stelle des Umfanges der Anordnung ein Strahl nur mehr an dieser Stelle ausbilden kann, da im Bereich des Strahles durch stimulierte Emissionen angeregte CO₂-Moleküle verbraucht werden und daher angeregte CO₂-Moleküle von dem Bereich, wo der Laser bereits angeschwungen ist, angesaugt werden, wodurch ein Anschwingen in der Umgebung dieses Bereiches nicht mehr möglich ist. Dies führt letztlich dazu, daß sich - insbesondere bei Einsatz von kreisringförmigen Spiegeln, wie vorstehend erwähnt - kein rotationssymmetrischer, hohlzylindrischer Strahl ausbildet. Es entsteht vielmehr nur ein dünner, zylindrischer Strahl, der keineswegs die volle Ausgangsleistung liefern kann. Darüberhinaus kann auch aus thermischen Gründen eine s-förmige Deformation der kreisringförmigen Spiegel entlang ihres Umfanges auftreten, was ebenfalls der Ausbildung eines hohlzylindrischen, rotationssymmetrischen Strahles entgegensteht.

Was die erste Art von Instabilität, nämlich die des Plasmas, betrifft, so ist hier vor allem folgender Mechanismus zu erwarten: An einer Stelle des Umfanges des hohlzylindrischen Plasmas steigt aus irgendeinem Grund kurzzeitig die Gastemperatur und damit auch der Gasdruck. Dadurch strömt von dieser Region Gas in azimutaler (umfänglicher) Richtung nach beiden Seiten, wodurch sich in dem genannten Bereich die Gasdichte vermindert. Damit kann aber an dieser Stelle die kühlende Gasströmung parallel zu den Elektroden in axialer Richtung weniger Gasatome je Volumseinheit transportieren, wodurch aus dem betreffenden Bereich weniger Wärmeenergie abgeführt wird. Damit steigt an dieser Stelle des Umfanges die Gastemperatur noch weiter an und es entsteht eine azimutale Inhomogenität der Gaseigenschaften und in der Folge auch der Plasmaeigenschaften, was für den Betrieb des Lasers in höchstem Maße schädlich ist. Die angeführten Vorgänge sind nur ein Beispiel für mögliche Instabilitäten der Gasströmung zwischen den koaxialen Elektroden bei der im Laserbetrieb verwendeten hohen Energiezufuhr je Volumseinheit. Auch andere Mechanismen können zu einer Störung der azimutalen Homogenität des Gases und des Plasmas führen.

Was die Neigung des durch kreisringförmige Spiegel erzeugten hohlzylindrischen Laserstrahles zur Ausbildung von azimutalen Inhomogenitäten betrifft, so wird an einer Stelle des Umfanges der Kreisringspiegeln durch optimale Reflektivität der Spiegeln und Verstärkung des Plasmas, die günstigste Voraussetzung für das Anschwingen bestehen. Es wird daher zunächst ein dünner Strahl anschwingen, der achsenparall verläuft und dessen Durchmesser kleiner ist als die volle Breite der Kreisringspiegel. Die Intensität in diesem Strahl wird dann ansteigen, womit die Besetzung des oberen Laserniveaus, also beim CO₂-Laser der asymmetrischen Molekülschwingung, immer mehr verringert wird, bis Sättigung eintritt. Rund um den nunmehr ausgebildeten Strahl wird aber die Dichte der CO₂-Moleküle, die den oberen Laserzustand einnehmen, erheblich größer sein. Dort ist noch keine Selbsterregung eingetreten, da die Verhältnisse etwas weniger günstiger sind als an jener Stelle, wo der Laser bereits angeschwungen ist. Durch das Konzentrationsgefälle der CO₂-Moleküle im oberen Laserzustand wird nun eine Diffusion von angeregten CO₂-Molekülen in jenem Bereich stattfinden, in dem sich bereits ein Strahl ausgebildet hat. Damit werden aber die Verhältnisse für eine Selbsterregung rund um den bereits angeschwungenen Strahl noch ungünstiger, sodaß dort ein Anschwingen nicht mehr in Frage kommt. Damit wird sich der Laserstrahl immer mehr auf den Bereich konzentrieren, wo er ursprünglich angeschwungen ist. Voraussetzung für das Auftreten dieses Phänomens ist, daß eine typische Zeitkonstante, die die Diffusion der im oberen Laserzustand befindlichen CO₂-Moleküle beschreibt, nicht größer als die Lebensdauer der CO₂-Moleküle im Zustand der asymmetrischen Schwingung ist. Die erstere Zeitkonstante kann aus der mittleren thermischen Geschwindigkeit der CO₂-Moleküle - selbstverständlich bestimmt durch die Gastemperatur und den mittleren Durchmesser des angeschwungenen zylinderförmigen Bereiches, der etwa durch die Breite der Ringspiegel gegeben ist - gewonnen werden. Die Lebensdauer des oberen Laserniveaus des CO₂-Lasers ist eine bekannte Materialkonstante. Sollte diese Lebensdauer doch erheblich kleiner sein als die wie oben beschrieben zu definierende Diffusionszeitkonstante, so besteht keine Gefahr einer Einschnürung des Modenvolumens auf eine Stelle des Umfanges des Resonators. Ist hingegen die Lebensdauer des oberen Laserniveaus in derselben Größenordnung wie die oben erwähnte Diffusionszeitkonstante oder sogar noch höher, so ist zu erwarten, daß der Laser nicht über den ganzen Umfang der Kreisringspiegel gleichförmig anschwingt.

Ähnliche Überlegungen gelten für alle anderen Gaslaser, wie etwa Excimerlaser oder CO₂-Laser.

Zur Verhinderung der erwähnten Instabilitäten sowohl im Plasma eines Gaslasers mit koaxialen Elektroden, wie auch im hohlzylindrischen Laserstrahl, wurde gemäß der EU-A1 457 061 für Wellenleiterlaser, somit für Laser von eher geringer Leistung, vorgeschlagen, entlang der Elektroden Trennwände anzuordnen, die gleichmäßig über den Umfang der Anordnung verteilt sind und in bezüglich der Längsachse der Anordnung radial verlaufenden Ebenen angeordnet sind. Die Trennwände können sich von der entweder metallischen oder mit Isoliermaterial bedeckten metallischen "dielektrischen" Innenelektrode in Richtung der metallischen oder dielektrischen Außenelektrode erstrecken. Die Trennwände bestehen bei der bekannten Vorrichtung aus einem isolierenden Material, etwa aus Keramik, und erstrecken sich nur zwischen den beiden Enden der Elektrodenanordnungen (in Richtung der Achse der Anordnung betrachtet) und enden vor den Resonatorspiegeln, sodaß zwischen den Trennwänden und den Resonatorspiegeln ein Freiraum vorhanden ist, der von den Trennwänden nicht unterteilt wird, somit die sich in den einzelnen Kammern zwischen benachbarten Trennwänden ausbildenden Laserstrahlen zumindest in den, den beiden Spiegeln benachbarten Bereichen, die Möglichkeit einer Synchronisierung und Kopplung haben, sodaß ein über den Umfang der Anordnung kohärentes Wellenfeld zustandekommen kann, wobei eine Kühlung für das lichtverstärkende Medium vorgesehen ist.

Im einzelnen verhindern die Trennwände sowohl das Abströmen von erhitztem Lasergas in azimutaler Richtung, als auch das Wegdiffundieren von angeregten CO₂-Molekülen. Gleichzeitig zerteilen die in radialer Richtung verlaufenden Trennwände aber auch das Wellenfeld des optischen Resonators in azimutaler Richtung, also in Richtung des Umfanges der Anordnung, so daß sich nur einzelne Strahlen in den durch die als Schote wirkenden Trennwänden begrenzten Kammern ausbilden können.

Aufgabe der Erfindung ist es, die azimutale Kohärenz weiter zu verbessern und die Laser auch für hohe Leistungen einsetzen zu können. Erreicht wird dies bei einem Gaslaser der eingangs erwähnten Art, wenn erfindungsgemäß die Trennwände sich nur über einen Teil der vollen Elektrodenlänge erstrecken und aus mehreren koplanar zueinander angeordneten Trennwandabschnitten bestehen und die Kühlung durch eine dem Elektrodenraum zugeführte Gasströmung erfolgt.

Da sich die Trennwände gemäß der erfindungsgemäßen Ausgestaltung des Gaslasers nur über einen Teil der Länge der koaxialen Elektroden ausdehnen und zwischen den Schoten und den an den beiden Enden des Plasmas angeordneten Spiegeln Freiräume ohne Schote vorhanden sind, tritt eine Wechselwirkung zwischen den einzelnen, in den durch die Schote (Trennwände) gebildeten Kammern sich bewegenden Teilstrahlen auf, die dazu führt, daß diese Teilstrahlen im Bereich der beiden Spiegeln und auch dazwischen synchronisiert werden und azimutale Kohärenz verbessert zustandekommt. Damit ist auch der Laserstrahl über den Umfang seines kreisringförmigen Querschnittes kohärent und homogen, was für die praktische Anwendung, etwa in der Lasermaterialbearbeitung, von großer Bedeutung ist. Die durch die hohe Laserleistung bedingte Wärme wird in ausreichendem Maße durch die erfindungsgemäß vorgesehene Kühlung durch eine dem Elektrodenraum zugeführte Gasströmung abgeführt, wobei diese Gasströmung durch die koplanare Anordnung der Trennwandabschnitte keine wesentliche Beeinträchtigung erfährt.

Die beschriebenen Trennwände haben auch noch den Vorteil, daß sie die äußere Elektrode im Abstand von der inneren Elektrode halten und die Elektroden gegeneinander abstützen.

Die Erfindung wird nachstehend anhand einer beispielsweisen Ausführungsform eines Koaxiallasers mit radialen Schoten, die von einer Innenelektrode zu einer Außenelektrode verlaufen, näher erläutert. Es zeigen,

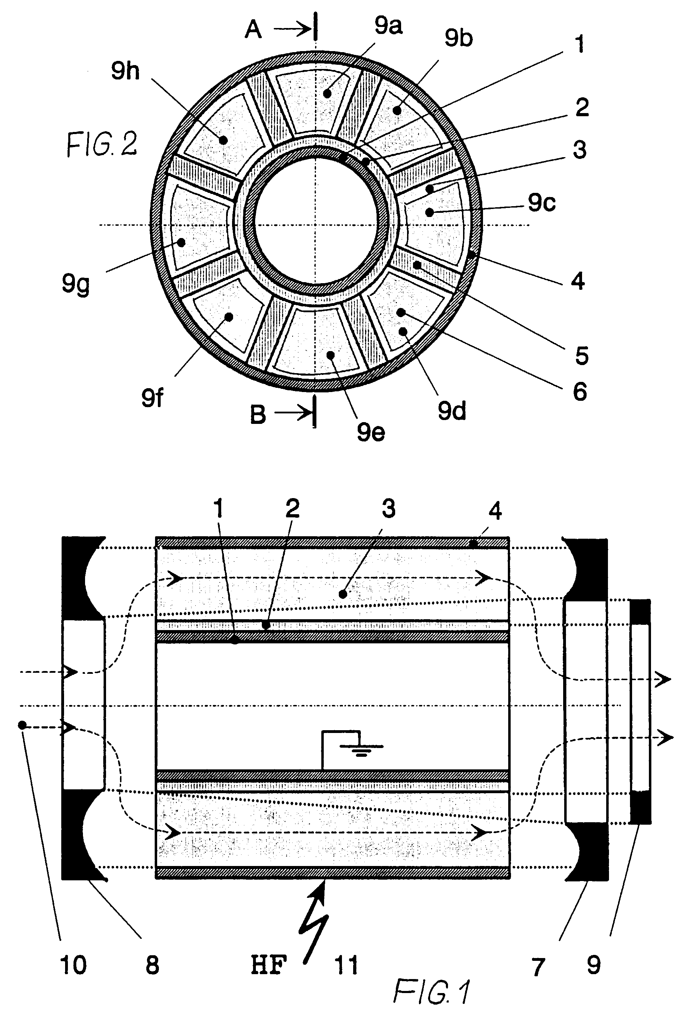

Fig. 1 einen Längsschnitt durch das erfindungsgemäße Elektrodensystem entlang der Linie A-B in
Fig. 2, die einen Querschnitt durch das Elektrodensystem der Fig. 1 veranschaulicht.

Bei der in der Zeichnung dargestellten Ausführung des Elektrodensystems wurde davon ausgegangen, daß eine der beiden Elektroden bzw. 4 eine sogenannte "dielektrische" Elektrode ist, bei der ein Rohr 2 aus einem isolierenden Material, etwa aus Glas oder Keramik, das Plasma 3 von der metallischen Elektrode 1 rohrförmiger Gestalt trennt, sodaß kein galvanischer Kontakt zwischen Plasma 3 und Metallelektrode 1 möglich ist, aber dennoch hochfrequente Energie 11 auf kapazitive Weise in das Plasma 3 eingekoppelt werden kann. Die zweite (Außen)Elektrode 4 stellt dann einen galvanischen Kontakt mit dem Plasma 3 her und besteht aus Metall.

Die Trennwände 5 unterteilen das Elektrodensystem und damit die Entladungen in acht Kammern 6, in denen das lichtverstärkende Plasma 3 brennt. Die Trennwände 5 können sich über die volle Länge der Elektroden 1 und 4 erstrecken, reichen jedoch bis zu den Spiegeln 7 und 8, welche die Rückkoppelung, Bündelung und Auskoppelung des hohlzylindrischen Laserstrahles 9 erlauben. Der hohlzylindrische Laserstrahl 9 ist durch die Kammern 6 im dargestellten Ausführungsbeispiel in acht Teile (Segmente) 9a - 9h aufgespalten, vereint sich aber in den Freiräumen vor den Spiegeln 7 und 8 wieder, sodaß der Laserstrahl 9 auf den Spiegeln 7, 8 wieder kreisringförmigen Querschnitt aufweist.

Eine Gasströmung 10 sorgt für die Abfuhr der Verlustwärme aus dem Plasma. 3.

## Patentansprüche

1. Gaslaser mit einem lichtverstärkenden Medium (3), das einen, zwischen zueinander koaxialen Elektrodenanordnungen befindlichen Raum, der zwischen Resonatorspiegeln angeordnet ist, durchströmt, wobei über den Umfang des Raumes zwischen den Elektrodenanordnungen verteilt, Trennwände (5) angeordnet sind, die in radialer Richtung zur Achse der Elektrodenanordnungen verlaufen und das lichtverstärkende Medium sowie den hohlzylindrischen Laserstrahl über den Umfang der Anordnung in mehrere Segmente (9a-9h) unterteilen, und die Trennwände (5) sich nur zwischen den beiden Enden der Elektrodenanordnungen, in Richtung der Achse der Anordnung betrachtet, erstrecken und vor den Resonatorspiegeln (7,8) enden, sodaß zwischen den Trennwänden (5) und den Resonatorspiegeln (7,8) ein Freiraum vorhanden ist, der von den Trennwänden (5) nicht unterteilt wird, somit die sich in den einzelnen Kammern (6) zwischen benachbarten Trennwänden ausbildenden Laserstrahlen zumindest in den, den beiden Spiegeln benachbarten Bereichen, die Möglichkeit einer Synchronisierung und Kopplung haben, sodaß ein über den Umfang der Anordnung kohärentes Wellenfeld zustandekommen kann, wobei eine Kühlung für das lichtverstärkende Medium durch eine dem Elektrodenraum zugeführte Gasströmung vorgesehen ist, dadurch gekennzeichnet, daß die Trennwände (5) sich nur über einen Teil der vollen Elektrodenlänge erstrecken und aus mehreren koplanar zueinander angeordneten Trennwandabschnitten bestehen.

## Claims

1. A gas laser with a light-amplifying medium (3) which flows through a cavity which is disposed between mutually coaxial electrode arrangements and is arranged between resonator mirrors, with separating walls (5) being distributed over the circumference of the cavity between said electrode arrangements, which walls extend in the radial direction to the axis of the electrode arrangements and subdivide the light-amplifying medium and the hollow-cylindrical laser beam into several segments (9a to 9h) over the circumference of the arrangement, and the separating walls (5) only extend between the two ends of the electrode arrangements, as seen in the direction of the axis of the arrangement, and end before the resonator mirrors (7, 8), so that between the separating walls (5) and the resonator mirrors (7, 8) there is a cavity which is not subdivided by the separating walls (5), as a result of which the laser beams created in the individual chambers (6) between adjacent separating walls have the possibility of a synchronization and coupling at least in the zones adjacent to the two mirrors, so that a wave field which is coherent over the circumference of the arrangement can be created, with a cooling for the light-amplifying medium by a gas flow supplied to the electrode compartment being provided, characterized in that the separating walls (5) extend over only a part of the full electrode length and consist of several separating wall sections which are arranged coplanar with respect to one another.

## Revendications

1. Laser à gaz avec un fluide amplifiant la lumière qui circule dans un espace situé entre des arrangements d'électrodes coaxiaux les uns par rapport aux autres et placé entre des miroirs de cavité et sur lequel des parois de séparation (5) réparties sur la circonférence de l'espace entre les arrangements d'électrodes et disposées dans un sens radial par rapport à l'axe des arrangements d'électrodes subdivisent le fluide amplifiant la lumière ainsi que le faisceau laser de forme cylindrique creuse en une pluralité de segments (9a-9h) sur la circonférence de l'arrangement, ces parois de séparation (5) s'étendant, vu dans le sens de l'axe de l'arrangement, seulement entre les deux extrémités des arrangements d'électrodes et finissant en amont des miroirs de cavité (7,8) de manière à ce qu'entre les parois de séparation (5) et les miroirs de cavité (7,8) un espace libre existe qui n'est pas subdivisé par les parois de séparation (5) pour que les faisceaux laser se formant dans les chambres individuelles (6) entre des parois de séparation voisines aient ainsi la possibilité d'une synchronisation et d'un couplage au moins dans les zones contiguës aux deux miroirs de manière à ce qu'un champs d'ondes cohérent se crée sur la circonférence de l'arrangement, un refroidissement au moyen d'un flux de gaz introduit dans la zone des électrodes étant prévu pour le fluide amplifiant la lumière, caractérisé en ce que les parois de séparation (5) ne s'étendent que sur une fraction de la longueur totale des électrodes et se composent de plusieurs sections de parois de séparation disposées de façon coplanaire les unes par rapport aux autres.
